# EUROPEAN PATENT SPECIFICATION

(11) **EP 3 396 927 B1**
(45) Date of publication and mention of the grant of the patent: **11.09.2019**
(21) Application number: 17193877.2
(22) Date of filing: 28.09.2017
(51) Int. Cl.: H04L 29/08, H04M 3/42, H04W 4/00

(54) **SYSTEM AND METHOD OF DOWNLOADING FILTERING RULES ONTO A MOBILE DEVICE**
SYSTEM UND VERFAHREN ZUM HERUNTERLADEN VON FILTERREGELN AUF EINE MOBILE VORRICHTUNG
SYSTÈME ET PROCÉDÉ DE TÉLÉCHARGEMENT DE RÈGLES DE FILTRAGE SUR UN DISPOSITIF MOBILE

(30) Priority: 28.04.2017 RU 2017115050; 24.05.2017 US 201715603842
(43) Date of publication of application: 31.10.2018
(73) Proprietor: AO Kaspersky Lab, Moscow 125212 (RU)
(72) Inventor: KOMISSAROV, Alexey P., 125212 Moscow (RU); YABLOKOV, Victor V., 125212 Moscow (RU); CHIKOV, Alexey M., 125212 Moscow (RU)
(74) Representative: Chimini, Francesco

(56) References cited:
- US-A1- 2012 005 316
- US-B1- 6 470 496

## Description

### FIELD OF TECHNOLOGY

The present disclosure relates to system and methods of downloading data, more specifically, methods of optimizing the downloading of data.

### BACKGROUND

Modern mobile operating systems are becoming more and more closed off, and applications are isolated from each other and from the interior of the operating system. At the same time, companies producing operating systems understand and acknowledge certain problems of computer security, such as the threats which a user encounters when web surfing. Understanding the problems of computer security, the makers of operating systems are taking the path of providing to the makers of means for protecting users against cyberthreats a possibility of controlling the downloading of certain rules with which the operating system or a specific application will work. Thus, applications for protecting users against cyberthreats are becoming providers of rules, and these rules are used either by the operating system or by previously installed applications, for example, by means of the web browser plug-in or by means of a plug-in (the "CallDirectory" extension) to the "Telephone" application.

Mobile devices have limited resources such as battery charge, RAM, nonvolatile memory volume, and so on. Problems exist, such as the filtering of web content, which require a large number of rules. On the one hand, the greater the volume of rules loaded onto the mobile device, the higher the probability of blocking web content unwanted by the user, but the more negative the user experience (User eXperience, UX) with the web content filtering system becomes, since the loading of a large volume of rules may slow down the working of the mobile device, and in some instances becomes a cause of crashing of the application for which these rules are loaded. User experience is the perception and responses of a user resulting from the use and/or the previous use of a product, a system, or a service. On the other hand, the more rules, the higher the probability of detection of undesirable content (Detection Rate, DR). A conflict emerges between UX and DR. The more rules, the higher the DR and the worse the UX.

The Apple® company in version 9 of iOS® operating system introduced a new technology of content filtration, making it possible to provide the Safari™ web browser with a set of rules for blocking the display of a site in its entirety or concealing web content (advertising). The set of rules is an application in the form of a plug-in downloadable to Safari (a text file with a list of rules), which may constitute an unlimited or a limited number of rules, such as up to 50,000 content filtering rules. Figures of 50,000 rules are feasible at present, but may change in the course of time. An application may have several such plug-ins, each of which the user needs to turn on manually. The limiting to 50,000 rules was seen by Apple as a solution to the problem of finding a balance between UX and DR in view of the features of the working of the WebKit™ rendering engine component, on the basis of which the Safari browser was developed. Unfortunately, due to limitations of the mobile platform and the browser, Safari simply cannot handle the downloading of a large number of rules, and in some instances they take 10 to 20 minutes to download, and sometimes the downloading results in a crashing of the application and/or Safari. The problem is aggravated because applications have no control over the downloading of the rules, their role is confined to a provider of the rules ("content/rules providers").

This problem presents itself not only to Apple, but also to applications on other mobile operating systems, including Android®, downloading rules for web content filtering, parental controls, and DNT (Do Not Track).

The existing solutions for minimizing the likelihood of crashing of applications in the process of downloading of rules are aimed at curtailing the number of filtering rules: the fewer the filtering rules, the less the likelihood of a crash and the faster they are downloaded. However, a large number and good quality of filtering rules are needed to maintain a high DR.

US2012/005316 A1 discloses a computing system configured to execute a computer program on a server and to provide a video stream of the program output to a geographically remote client over a communication network; US 6 470 496 B1 discloses a control program downloading method that is used by a digital broadcast receiving apparatus equipped with a storing device which stores an update program and a non-update program that compose a control program.

### SUMMARY

The present disclosure is designed to implement the downloading of a large volume of filtering rules onto the mobile device of a user. As a solution for the aforementioned problem, an algorithm has been developed with a delayed downloading of rules databases.

The technical result of the present disclosure includes decreasing the burden on resources of the mobile device in the process of downloading filtering rules by changing the parameters of the downloading of the filtering rules upon detecting critical situations in the working of the mobile device.

According to an example, a method is provided for downloading data including filtering rules from a remote server onto a mobile device. The method includes determining a first list, from a plurality of lists of filtering rules, having a highest indicator of frequency of actuation of the filtering rules from the list, wherein the filtering rules from the lists being designated for use by a first application on the mobile device, and wherein the filtering rules filter one or more of web content, actions, applications, incoming calls and messages by one or more of telephone number and message content, and transmitting the determined list to the mobile device with the aid of a second application, the second application on the mobile device being a provider of the filtering rules for the first application. The method further includes dividing each of the remaining non-downloaded lists of filtering rules intended for downloading onto the mobile device into a plurality of parts having a first size, generating a set of groups of filtering rules, in each of whose groups is placed not more than one part of each remaining non-downloaded list of filtering rules, and transmitting the groups of filtering rules to the mobile device during time intervals having a first duration until the generated set of groups are fully downloaded onto the mobile device.

In another example, the method further includes, responsive to detecting a change in the operation of the mobile device, reducing the first size of the plurality of parts having the remaining non-downloaded lists of filtering rules.

In another example, the method further includes, responsive to detecting a change in the operation of the mobile device, increasing the first duration of the time intervals for downloading the set of groups of filtering rules.

In another example, the time intervals are increased responsive to determining that the size of the parts are ineligible for a size decrease.

In another example, the method further includes modifying at least one of the size of the plurality of parts and the duration of the time intervals response to detecting a change in the operation of the mobile device, wherein the change comprises at least one of: crashing of the first application, decrease in free memory of the mobile device down to a predetermined level, and decrease in a volume of free space on a storage device of the mobile device down to a predetermined level.

In another example, the downloading of the set of groups of filtering rules is done in sequence, starting with a group including filtering rules with the highest indicators of frequency of actuation, and ending with a group of rules with the lowest indicators of frequency of actuation.

In another example, the filtering rules are configured for the filtering of data including at least one of web content, telephone calls, and applications for mobile devices.

According to another example of the present disclosure, a system is provided for downloading data including filtering rules from a remote server onto a mobile device. The system includes a memory device storing a plurality of lists of filtering rules, and a processor. The processor is configured to determine a first list, from the plurality of lists of filtering rules, having a highest indicator of frequency of actuation of the filtering rules from the list, wherein the filtering rules from the lists being designated for use by a first application on the mobile device, and wherein the filtering rules filter one or more of web content, actions, applications, incoming calls and messages by one or more of telephone number and message content; and transmit the determined list to the mobile device with the aid of a second application, the second application on the mobile device being a provider of the filtering rules for the first application. The processor is further configured to divide each of the remaining non-downloaded lists of filtering rules intended for downloading onto the mobile device into a plurality of parts having a first size, generate a set of groups of filtering rules, in each of whose groups is placed not more than one part of each remaining non-downloaded list of filtering rules, and transmit the groups of filtering rules to the mobile device during time intervals having a first duration until the generated set of groups are fully downloaded onto the mobile device.

The above simplified summary of example embodiments of the invention serves to provide a basic understanding of the present disclosure. This summary is not an extensive overview of all contemplated embodiments, and is intended to neither identify key or critical elements of all embodiments nor delineate the scope of any or all embodiments of the present disclosure. Its sole purpose is to present one or more embodiments in a simplified form as a prelude to the more detailed description of the disclosure that follows. To the accomplishment of the foregoing, the one or more embodiments of the present disclosure include the features described and exemplarily pointed out in the claims.

### BRIEF DESCRIPTION OF THE DRAWINGS

The accompanying drawings, which are incorporated into and constitute a part of this specification, illustrate one or more example embodiments of the present disclosure and, together with the detailed description, serve to explain their principles and implementations.
**Fig. 1** illustrates a block diagram of a system for downloading filtering rules according to an example.
**Fig. 2** illustrates a flowchart of a method of downloading filtering rules onto a mobile device according to an example.
**Fig. 3** illustrates a block diagram of a general-purpose computer system on which the disclosed system and method can be implemented according to an example.

### DETAILED DESCRIPTION

Example embodiments are described herein in the context of a system, method and computer program product for downloading filtering rules onto a mobile device. Those of ordinary skill in the art will realize that the following description is illustrative only and is not intended to be in any way limiting. Other embodiments will readily suggest themselves to those skilled in the art having the benefit of this disclosure. Reference will now be made in detail to implementations of the example embodiments as illustrated in the accompanying drawings. The same reference indicators will be used to the extent possible throughout the drawings and the following description to refer to the same or like items.

When a user installs an application in the operating system of a mobile device and activates the filtering functionality, that application becomes a provider of filtering rules, while the filtering is done directly by applications pre-installed in the operating system. For example, for the filtering of web content in the framework of the operating system iOS, the user installs a security application (such as Kaspersky ADCleaner™ made available by Kaspersky Lab), by means of which rules for the filtering of web content are downloaded onto the mobile device of the user. These rules utilize a pre-installed plug-in in the Safari browser, applying them to the content of the web pages visited by the user. We shall call the first application the application on the mobile device having the filtering functionality for which the filtering rules are intended. That is, the first application enables the performing of the filtering with the use of the corresponding filtering rules intended for the filtering of web content or telephone calls, or mobile device applications. We shall call the second application the application on the mobile device which is the provider of the filtering rules for the first application. For example, the security application (such as Kaspersky Who Calls™ made available by Kaspersky Lab) is the provider of filtering rules (the second application) for the practical application "Telephone" (the first application) which is built into or pre-installed on any given operating system of mobile devices and designed to make calls. The "Telephone" application has a built-in functionality for the filtering of incoming calls by telephone number. All of the filtering rules provided by the second application for the first application have a certain format consistent with the first application.

The examples of the present disclosure which shall be disclosed in detail below can be used not only for downloading web content filtering rules for built-in applications in the framework of the Apple iOS operating system, but also in its entirety for the downloading of filtering rules for corresponding applications on mobile devices under the control of any given operating systems (iOS, Android, Windows Mobile and others) which are used to carry out a filtering of web content, parental control (filtering of actions or applications), filtering of incoming calls and messages by telephone number and/or message content. Thus, the rules which need to be downloaded onto a mobile device are known as filtering rules, while the web content filtering rules are a particular case of filtering rules. The term "web content filtering rules" shall be used afterwards in the text instead of the general term "filtering rules" for a more cogent description of the proposed technology on the example of a downloading of web content filtering rules in the framework of the operating system Apple iOS.

In one example a method is realized for the downloading of filtering rules onto a mobile device, whereby: (a) with the aid of a download control means, among at least two lists of filtering rules intended for downloading onto a mobile device there is determined one list with the highest indicator of frequency of actuation of the filtering rules from the list, these filtering rules from the lists being designated for use by the first application on the mobile device; (b) the list determined in step (a) is downloaded onto the mobile device with the aid of a second application, the second application on the mobile device being the provider of the filtering rules for the first application; (c) each of the remaining non-downloaded lists of filtering rules intended for downloading onto the mobile device is broken up into parts of a certain size with the aid of the download control means; (d) a set of groups of filtering rules is formed, in each of whose groups is placed not more than one part of each remaining non-downloaded list of filtering rules, with the aid of the download control means; (e) with the aid of the second application, the groups of filtering rules are downloaded onto the mobile device with a certain interval of time until said formed set of groups is fully downloaded; wherein upon detection by the second application of a critical situation in the working of the mobile device in the process of downloading a group of filtering rules onto the mobile device, steps c) to e) are carried out, reducing the size of the aforementioned parts and/or increasing the aforementioned interval of time.

The filtering rules are designed for the filtering of web content or telephone calls, or applications for mobile devices.

In another example, the aforementioned interval of time is increased only in the event that it is not possible to decrease the size of the aforementioned parts.

In yet another example, critical situations in the working of the mobile device are: crashing of the first application; decrease in free RAM of the mobile device down to a predetermined level; decrease in the volume of free space on the hard disk of the mobile device down to a predetermined level.

In another example, the downloading of the set of groups of filtering rules is done in sequence, starting with the group including filtering rules with the highest indicators of frequency of actuation, and ending with the group of rules with the lowest indicators of frequency of actuation.

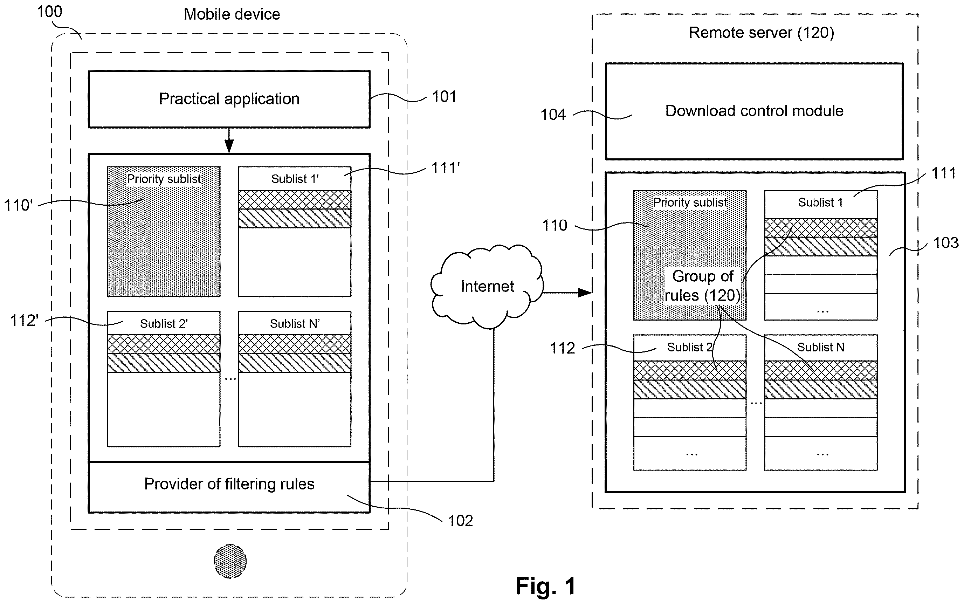

**Figure 1** illustrates a block diagram of a system for downloading filtering rules according to an example. The system as shown includes at least a mobile device **100** and a remote server **120.** The mobile device **100** includes a practical application **101** (i.e., a first application), and a provider of filtering rules **102** (i.e., a second application). The remote server **120** includes a download control module **104** and a database **103** storing a plurality of web content filtering rules. These filtering rules are designated for use by the application **101** on the mobile device.

The web content filtering rules which need to be downloaded onto the mobile device **100** of a user are broken up into several sublists **110, 111, 112** or, in other words, lists of rules, each of which has its own value to the user. The lists of rules **110, 111, 112** are stored in a database **103** on a remote server **120.**

The downloading of rules onto the mobile device **100** is done by means of an application **102** which is a provider of filtering rules (the second application), while the filtering itself is done directly by a practical application **101** (the first application) pre-installed in the operating system of the mobile device **100.** For example, in the framework of the operating system Apple iOS, the pre-installed practical application **101** for performing the web content filtering in the browser Safari will be a special plug-in, while the provider of filtering rules (the application **102)** will be a security application (e.g., Kaspersky ADCleaner).

In one example, the download control module **104** may be configured to, among at least two lists of filtering rules intended for downloading onto a mobile device **100,** determine one list (e.g., a "priority" sublist **110)** with a highest indicator of frequency of actuation of the filtering rules from the list. The lists of rules from the database **103** which are intended for downloading onto the mobile device **100** are prioritized in importance, but there is one list, the most important (i.e., the priority sublist **110),** which is determined by the indicator of the frequency of actuation of the rules on the list. This indicator is a characteristic of the lists of rules and contains information on how often the rules on the corresponding list are used (actuated). The higher this indicator for a list of rules, the more useful that list of rules to the user, and the more important it is for it to be downloaded first onto the mobile device to enhance the working efficiency of the corresponding application. Therefore, in the context of the present disclosure, the list with the highest indicator of frequency of actuation of the rules on the list may be assigned a high priority or level of importance relative to other lists.

The lists of rules may be thematic (content referencing weapons, violence, drugs, and so on), that is, contain a set of web content filtering rules aimed at guarding the user against content on the corresponding theme on the Internet. The lists of rules may be regional, aimed at blocking out advertising on Internet resources corresponding to a particular geographical region (Russian Federation (RF), Commonwealth of Independent States (CIS), Europe, and so on). In the general case, the lists of rules (sublists) are sets of filtering rules. There might not even be any criteria by which the filtering rules are assembled into lists. Alternatively the only unifying characteristic for a list of rules might be the expert company itself which composes and updates that list.

In one example, the download control module **104** may be configured to divide each of the remaining non-downloaded lists of filtering rules intended for downloading onto the mobile device **100** into parts of a certain size. The download control module **104** may be configured to form a set of groups of filtering rules, in each of whose groups is placed not more than one part of each remaining non-downloaded list of filtering rules. As described earlier, the priority sublist **110** of filtering rules is downloaded first, in order to provide a basic level of protection to the mobile device. The next step is the downloading of the groups of rules which include parts of fixed size from each of the remaining lists of rules **(Sublist 1, Sublist 2,** ..., **Sublist N).** That is, each group of rules being downloaded onto the mobile device **100** is made up of not more than one part of the rules from each of the remaining lists of rules (for example, **Rule group 120).** If a list of rules still contains filtering rules for downloading onto the mobile device **100,** the download control module **104** includes one part of the rules from this list of rules in the group of rules being downloaded. The parts of rules for downloading are formed from the rules with the highest frequency of actuation within each of the lists of rules. The purpose of such a downloading is to activate in the shortest period of time the working of all lists of rules on the mobile device of the user by filling them up in parallel, in an efficient manner, so that even a list of rules not fully downloaded has a good chance of actuation. This approach has a positive impact on the user experience with the filtering systems on mobile devices in the process of downloading rules without a resulting loss in the indicator of the detection rate.

In some examples, the second application **102** is configured to download the groups of filtering rules onto the mobile device with a certain interval of time until said formed set of groups is fully downloaded. In one example, the application **102** analyzes the characteristics of the mobile device **100** to determine the performance index of the mobile device **100.** If as a result of the analysis it is established that the performance index of the mobile device **100** is high (for example, in terms of an established threshold value of the index), then after downloading the most important list of the filtering rules **110** an attempt is made to simultaneously download all remaining lists of rules. If this attempt is unsuccessful, and not all of the remaining lists of rules can be downloaded straight away, or if the performance index of the mobile device **100** is low, then the above-described mechanism of fragmenting the lists is used for the downloading of the rules.

In the application **102** there is implemented a fault tolerance mechanism, making it possible to detect by various characteristics critical situations in the working of the mobile device **100** and/or the practical application **101.** In keeping with the current policy of the makers of operating systems for mobile devices, the application of the filtering rules providers **102** does not have access to the practical application **101,** the two applications being isolated from each other. It can be difficult for the application **102** to obtain feedback as to the working of the application **101:** the result of performing an operation might not be forthcoming, the errors seem unclear, the causes incomprehensible. However, the application **102** has access to the current parameters of the mobile device **100,** by which in the context of the present disclosure the application **102** detects the following critical situations in the working of the mobile device **100:**
- crashing of the application which is using the filtering rules being downloaded (the practical application **101);**
- decrease in free RAM of the mobile device **100** down to a predetermined level;
- decrease in the volume of free space on the hard disk of the mobile device **100** down to a predetermined level.

The detection of a critical situation in the working of the mobile device **100** in the course of downloading the filtering rules is a trigger for changing the download strategy, by decreasing the size of the parts into which the remaining lists of rules are broken up **(Sublist 1, Sublist 2, ..., Sublist N).** In one example, the second application **102** is configured to detect a critical situation in the working of the mobile device in the process of downloading a group of filtering rules onto the mobile device, and in response reduce the size of the aforementioned parts and/or increase the aforementioned interval of time.

In one example, the downloading of the aforementioned groups of filtering rules coming after the first group of filtering rules **120** into corresponding sublists on the mobile device **100** (Sublist 1', Sublist 2', ..., Sublist N') is done in the background at specified (definite) intervals of time (such as 45 seconds) after the user minimizes the application **102** and switches to a different application. In this way, the downloading of the filtering rules is spaced out over time, so that it is possible to avoid competing for resources of the mobile device **100** with other applications and increase the reliability of the downloading of the lists of rules by significantly decreasing the risk of crashing of the practical application **101,** since the filtering rules are being downloaded in relatively small blocks at the same time. The user at once obtains a rather fair quality of filtration by virtue of a single full-value search and gradual filling up of the remaining sublists with filtering rules with the largest frequency of actuation over the course of several minutes or dozens of minutes.

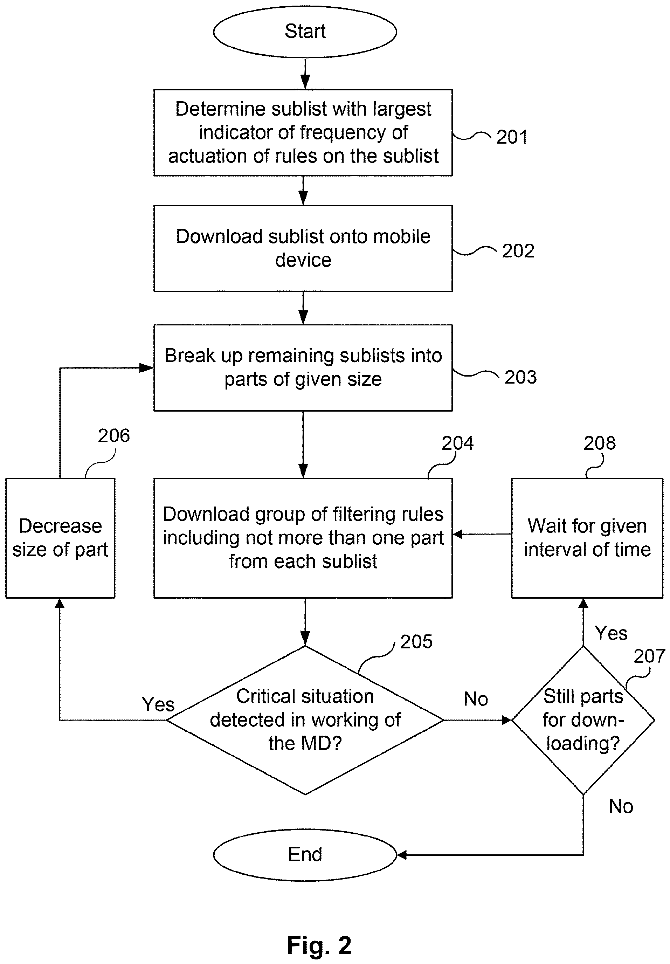

**Figure 2** illustrates a flowchart of a method of downloading filtering rules onto a mobile device **100** according to an example. It is noted that the following description of the exemplary method makes reference to the system and components described above.

According to this method **200,** in step **201** there is a determination of the sublist with the largest indicator of the frequency of actuation of the filtering rules by the sublist among all the sublists intended for downloading onto the mobile device **100.** In some examples, the download control module **104** determines a first list (e.g., priority sublist **110)** from the plurality of lists of filtering lists having a highest indicator of frequency of actuation of the filtering rules from the list. The filtering rules from the lists may be designated for use by a first application (e.g., practical application **101)** on the mobile device **100.**

At step **202,** this sublist can be fully downloaded onto the mobile device **100** for a rapid accomplishing of a good level of filtering (quality of filtering). In some examples, the remote server **120** transmits the determined list to the mobile device with the aid of a second application **102** being the provider of filtering rules. As such, the second application **102** may download the determined priority list onto the mobile device **100.**

The remaining sublists in step **203** are broken up into parts of a given size (blocks). In some examples, the download control module **204** may divide each of the remaining non-downloaded lists of filtering rules intended for downloading onto the mobile device into a plurality of parts having a first size. The size of a block may be determined on the basis of the parameters of the mobile device **100.** The size of the block is the bigger, the higher the productivity of the mobile device **100,** and the lower the current level of utilization of the resources of the mobile device **100.** In one example, the filtering rules in the remaining sublists are arranged according to their frequency of actuation. The downloading of the parts can be done in sequence, starting with the parts including filtering rules with the largest indicators of frequency of actuation, and ending with parts with the lowest indicators.

In some examples, the downloading of the parts is done by groups of filtering rules, each of which includes not more than one part from each remaining sublist. At step **204,** the download control module **204** may generate a set of groups of filtering rules in each of whose groups is placed not more than one part of each remaining non-downloaded list of filtering rules. In general, the download control module 204 transmits the group of filtering rules to the mobile device during time intervals having a first duration until the generated set of groups are fully downloaded onto the mobile device. The second application **102** downloads the groups of filtering rules onto the mobile device with a certain interval of time until said formed set of groups is fully downloaded.

After each downloading of a group of rules, in step **205** the built-in fault-tolerance mechanism of the application **102** performs a check to determine a critical situation in the working of the mobile device **100.** In some examples, the download control module **204** may detect a change in the operation of the mobile device, including such changes as a crashing of the first application, decrease in free memory of the mobile device down to a predetermined level, and decrease in a volume of free space on a storage device of the mobile device down to a predetermined level. The download control module may modify at least one of the size of the plurality of parts and the duration of the time intervals response to detecting the change in the operation of the mobile device.

In some examples, upon detection by the second application of a critical situation in the working of the mobile device in the process of downloading a group of filtering rules onto the mobile device, steps **203, 204** are carried out, reducing the size of the aforementioned parts and/or increasing the aforementioned interval of time

For example, at step **206,** if a critical situation is detected, the download control module 204 may reduce the first size of the plurality of parts having the remaining non-downloaded lists of filtering rules. As such, the block size of the fragmentation of the sublists is decreased and operations may return to step **203,** in which the remaining sublists are broken down into parts of corresponding decreased fixed size. In some examples, the download control module 204 may increase the first duration of the time intervals for downloading the set of groups of filtering rules responsive to detecting a change in the operation of the mobile device. In some examples, the time intervals are increased responsive to determining that the size of the parts are ineligible for a size decrease, for example, the size of the parts have already been reduced to a pre-determined minimum size and cannot be reduced further.

If no critical situation is found, then after waiting for the fixed interval of time in step **208** the downloading of the next group of filtering rules is done, provided that non-downloaded parts of sublists still remain. But if no parts remain for downloading, the rule downloading process is finished in step **207.**

One of the goals of the present disclosure is to broaden the arsenal of technical means designed to carry out the downloading of a large number of filtering rules onto a user's mobile device. The following technical results may also be achieved in the context of the present disclosure: embodiments of the present invention may reduce the workload of the resources of the mobile device in the process of downloading the filtering rules, thanks to a changing of the parameters of the downloading of the filtering rules when critical situations are detected in the working of the mobile device. Embodiments of the present invention may also increase reliability of downloading the filtering rules onto a mobile device, which is achieved by the presence of a fault-tolerance mechanism which is able to change the parameters of the downloading of the filtering rules when critical situations are detected in the working of the mobile device, to ensure a complete downloading of all the filtering rules onto the mobile device. Embodimetns of the present invention also can ensure downloading of all filtering rules onto a mobile device, which is achieved by the presence of a fault-tolerance mechanism which is able to change the parameters of the downloading of the filtering rules when critical situations are detected in the working of the mobile device.

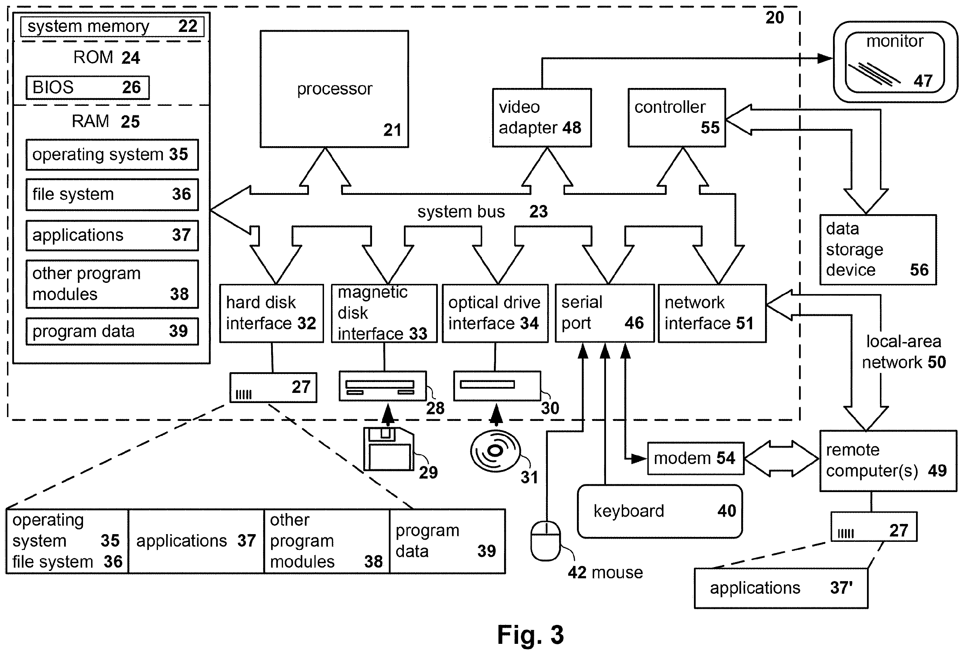

**Fig. 3** is a diagram illustrating a general-purpose computer system **20** on which various embodiments of systems and methods for downloading filtering rules may be implemented in accordance with an example. It should be noted that the computer system **20** can correspond to the mobile device 100 and remote server 120, for example, described earlier.

As shown, the computer system **20** (which may be a personal computer or a server) includes a central processing unit **21,** a system memory **22,** and a system bus **23** connecting the various system components, including the memory associated with the central processing unit **21.** As will be appreciated by those of ordinary skill in the art, the system bus **23** may comprise a bus memory or bus memory controller, a peripheral bus, and a local bus that is able to interact with any other bus architecture. The system memory may include permanent memory (ROM) **24** and random-access memory (RAM) **25.** The basic input/output system (BIOS) **26** may store the basic procedures for transfer of information between elements of the computer system **20,** such as those at the time of loading the operating system with the use of the ROM **24.**

The computer system **20,** may also comprise a hard disk **27** for reading and writing data, a magnetic disk drive **28** for reading and writing on removable magnetic disks 29, and an optical drive **30** for reading and writing removable optical disks **31,** such as CD-ROM, DVD-ROM and other optical media. The hard disk **27,** the magnetic disk drive **28,** and the optical drive **30** are connected to the system bus **23** across the hard disk interface **32,** the magnetic disk interface **33** and the optical drive interface **34,** respectively. The drives and the corresponding computer information media are power-independent modules for storage of computer instructions, data structures, program modules and other data of the computer system **20.**

An example comprises a system that uses a hard disk **27,** a removable magnetic disk **29** and a removable optical disk **31** connected to the system bus **23** via the controller **55.** It will be understood by those of ordinary skill in the art that any type of media **56** that is able to store data in a form readable by a computer (solid state drives, flash memory cards, digital disks, random-access memory (RAM) and so on) may also be utilized.

The computer system **20** has a file system **36,** in which the operating system **35,** may be stored, as well as additional program applications **37,** other program modules **38,** and program data **39.** A user of the computer system **20** may enter commands and information using keyboard 40, mouse 42, or any other input device known to those of ordinary skill in the art, such as, but not limited to, a microphone, joystick, game controller, scanner, *etc..* Such input devices typically plug into the computer system **20** through a serial port **46,** which in turn is connected to the system bus, but those of ordinary skill in the art will appreciate that input devices may be also be connected in other ways, such as, without limitation, via a parallel port, a game port, or a universal serial bus (USB). A monitor **47** or other type of display device may also be connected to the system bus **23** across an interface, such as a video adapter **48.** In addition to the monitor **47,** the personal computer may be equipped with other peripheral output devices (not shown), such as loudspeakers, a printer, *etc.*

Computer system **20** may operate in a network environment, using a network connection to one or more remote computers **49.** The remote computer (or computers) **49** may be local computer workstations or servers comprising most or all of the aforementioned elements in describing the nature of a computer system **20.** Other devices may also be present in the computer network, such as, but not limited to, routers, network stations, peer devices or other network nodes.

Network connections can form a local-area computer network (LAN) **50** and a wide-area computer network (WAN). Such networks are used in corporate computer networks and internal company networks, and they generally have access to the Internet. In LAN or WAN networks, the personal computer **20** is connected to the local-area network **50** across a network adapter or network interface **51.** When networks are used, the computer system **20** may employ a modem **54** or other modules well known to those of ordinary skill in the art that enable communications with a wide-area computer network such as the Internet. The modem **54,** which may be an internal or external device, may be connected to the system bus **23** by a serial port **46.** It will be appreciated by those of ordinary skill in the art that said network connections are nonlimiting examples of numerous well-understood ways of establishing a connection by one computer to another using communication modules.

In various examples, the systems and methods described herein may be implemented in hardware, software, firmware, or any combination thereof. If implemented in software, the methods may be stored as one or more instructions or code on a non-transitory computer-readable medium. Computer-readable medium includes data storage. By way of example, and not limitation, such computer-readable medium can comprise RAM, ROM, EEPROM, CD-ROM, Flash memory or other types of electric, magnetic, or optical storage medium, or any other medium that can be used to carry or store desired program code in the form of instructions or data structures and that can be accessed by a processor of a general purpose computer.

In various examples, the systems and methods described in the present disclosure can be addressed in terms of modules. The term "module" as used herein refers to a real-world device, component, or arrangement of components implemented using hardware, such as by an application specific integrated circuit (ASIC) or field-programmable gate array (FPGA), for example, or as a combination of hardware and software, such as by a microprocessor system and a set of instructions to implement the module's functionality, which (while being executed) transform the microprocessor system into a special-purpose device. A module may also be implemented as a combination of the two, with certain functions facilitated by hardware alone, and other functions facilitated by a combination of hardware and software. In certain implementations, at least a portion, and in some cases, all, of a module may be executed on the processor of a general purpose computer (such as the one described in greater detail in Figure 3, above). Accordingly, each module may be realized in a variety of suitable configurations, and should not be limited to any particular implementation exemplified herein.

In the interest of clarity, not all of the routine features of the embodiments are disclosed herein. It would be appreciated that in the development of any actual implementation of the present disclosure, numerous implementation-specific decisions must be made in order to achieve the developer's specific goals, and these specific goals will vary for different implementations and different developers. It is understood that such a development effort might be complex and time-consuming, but would nevertheless be a routine undertaking of engineering for those of ordinary skill in the art, having the benefit of this disclosure.

Furthermore, it is to be understood that the phraseology or terminology used herein is for the purpose of description and not of restriction, such that the terminology or phraseology of the present specification is to be interpreted by the skilled in the art in light of the teachings and guidance presented herein, in combination with the knowledge of the skilled in the relevant art(s). Moreover, it is not intended for any term in the specification or claims to be ascribed an uncommon or special meaning unless explicitly set forth as such.

The various embodiments disclosed herein encompass present and future known equivalents to the known modules referred to herein by way of illustration. Moreover, while embodiments and applications have been shown and described, it would be apparent to those skilled in the art having the benefit of this disclosure that many more modifications than mentioned above are possible without departing from the inventive concepts disclosed herein. The scope of protection of the present application however is defined by the appended claims.

## Claims

1. A method for downloading data including filtering rules from a remote server (120) onto a mobile device (100), wherein the method comprises:
determining (201) a first list (110), from a plurality of lists of filtering rules, having a highest indicator of frequency of actuation of the filtering rules from the list, wherein the filtering rules from the lists are designated for use by a first application (101) on the mobile device, and wherein the filtering rules filter one or more of web content, actions, applications, incoming calls and messages by one or more of telephone number and message content;
transmitting (202) the determined list to the mobile device with the aid of a second application (102), the second application on the mobile device being a provider of the filtering rules for the first application;
dividing (203) each of the remaining non-downloaded lists of filtering rules intended for downloading onto the mobile device into a plurality of parts having a first size;
generating (204) a set of groups of filtering rules, in each of whose groups is placed not more than one part of each remaining non-downloaded list of filtering rules; and
transmitting the groups of filtering rules to the mobile device during time intervals having a first duration until the generated set of groups are fully downloaded onto the mobile device.

2. The method according to claim 1, further comprising:
responsive to detecting a change in the operation of the mobile device, reducing (206) the first size of the plurality of parts having the remaining non-downloaded lists of filtering rules.

3. The method according to any of claims 1 to 2, further comprising:
responsive to detecting a change in the operation of the mobile device, increasing the first duration of the time intervals for downloading the set of groups of filtering rules.

4. The method according to claim 3, wherein the time intervals are increased responsive to determining that the size of the parts are ineligible for a size decrease.

5. The method according to any of claims 1 to 4, further comprising:
modifying at least one of the size of the plurality of parts and the duration of the time intervals response to detecting a change in the operation of the mobile device, wherein the change comprises at least one of: crashing of the first application, decrease in free memory of the mobile device down to a predetermined level, and decrease in a volume of free space on a storage device of the mobile device down to a predetermined level.

6. The method according to any of claims 1 to 5, wherein the downloading of the set of groups of filtering rules is done in sequence, starting with a group including filtering rules with the highest indicators of frequency of actuation, and ending with a group of rules with the lowest indicators of frequency of actuation.

7. The method according to any of claims 1 to 6, wherein the filtering rules are configured for the filtering of data including at least one of web content, telephone calls, and applications for mobile devices.

8. A system for downloading data including filtering rules from a remote server (120) onto a mobile device (100), wherein the system comprises:
a memory device (103) storing a plurality of lists of filtering rules; and
a processor configured to:
determine a first list, from the plurality of lists of filtering rules, having a highest indicator of frequency of actuation of the filtering rules from the list, wherein the filtering rules from the lists being designated for use by a first application (101) on the mobile device, and wherein the filtering rules filter one or more of web content, actions, applications, incoming calls and messages by one or more of telephone number and message content;
transmit the determined list to the mobile device with the aid of a second application (102), the second application on the mobile device being a provider of the filtering rules for the first application;
divide each of the remaining non-downloaded lists of filtering rules intended for downloading onto the mobile device into a plurality of parts having a first size;
generate a set of groups of filtering rules, in each of whose groups is placed not more than one part of each remaining non-downloaded list of filtering rules; and
transmit the groups of filtering rules to the mobile device during time intervals having a first duration until the generated set of groups are fully downloaded onto the mobile device.

9. The system according to claim 8, wherein the processor is further configured to:
responsive to detecting a change in the operation of the mobile device, reduce the first size of the plurality of parts having the remaining non-downloaded lists of filtering rules.

10. The system according to any of claims 8 to 9, wherein the processor is further configured to:
responsive to detecting a change in the operation of the mobile device, increase the first duration of the time intervals for downloading the set of groups of filtering rules.

11. The system according to claim 10, wherein the time intervals are increased responsive to determining that the size of the parts are ineligible for a size decrease.

12. The system according to any of claims 8 to 11, wherein the processor is further configured to:
modify at least one of the size of the plurality of parts and the duration of the time intervals response to detecting a change in the operation of the mobile device, wherein the change comprises at least one of: crashing of the first application, decrease in free memory of the mobile device down to a predetermined level, and decrease in a volume of free space on a storage device of the mobile device down to a predetermined level.

13. The system according to any of claims 8 to 12, wherein the downloading of the set of groups of filtering rules is done in sequence, starting with a group including filtering rules with the highest indicators of frequency of actuation, and ending with a group of rules with the lowest indicators of frequency of actuation.

14. The system according to any of claims 8 to 13, wherein the filtering rules are configured for the filtering of data including at least one of web content, telephone calls, and applications for mobile devices.

## Patentansprüche

1. Verfahren zum Herunterladen von Daten, die Filterregeln enthalten, von einem entfernten Server (120) auf eine mobile Vorrichtung (100), wobei das Verfahren umfasst:
Bestimmen (201) einer ersten Liste (110) aus einer Vielzahl von Listen mit Filterregeln, die eine höchste Anzeige für die Häufigkeit der Aktivierung der Filterregeln von der Liste haben, wobei die Filterregeln aus den Listen für die Verwendung durch eine erste Anwendung (101) auf der mobilen Vorrichtung bestimmt sind, und wobei die Filterregeln Webinhalt und/oder Aktionen und/oder Anwendungen und/oder eingehende Anrufe und/oder Nachrichten nach Telefonnummer und/oder Nachrichteninhalt filtern;
Übertragen (202) der bestimmten Liste an die mobile Vorrichtung mit Hilfe einer zweiten Anwendung (102), wobei die zweite Anwendung auf der mobilen Vorrichtung ein Bereitsteller der Filterregeln für die erste Anwendung ist;
Teilen (203) jeder der verbliebenen nicht heruntergeladenen Listen mit Filterregeln, die für das Herunterladen auf die mobile Vorrichtung gedacht sind, in eine Vielzahl von Teilen mit einer ersten Größe;
Erzeugen (204) eines Satzes von Gruppen von Filterregeln, wobei in jeder dieser Gruppen nicht mehr als ein Teil jeder verbliebenen nicht heruntergeladenen Liste mit Filterregeln angeordnet ist; und
Übertragen der Gruppen von Filterregeln an die mobile Vorrichtung während Zeitintervallen mit einer ersten Dauer, bis der erzeugte Satz von Gruppen vollständig auf die mobile Vorrichtung heruntergeladen ist.

2. Verfahren nach Anspruch 1, das ferner umfasst:
ansprechend auf das Erfassen einer Änderung im Betrieb der mobilen Vorrichtung Verringern (206) der ersten Größe der Vielzahl von Teilen mit den verbleibenden nicht heruntergeladenen Listen mit Filterregeln.

3. Verfahren nach Anspruch 1 oder 2, das ferner umfasst:
ansprechend auf das Erfassen einer Änderung im Betrieb der mobilen Vorrichtung Verlängern der ersten Dauer der Zeitintervalle zum Herunterladen des Satzes von Gruppen von Filterregeln.

4. Verfahren nach Anspruch 3, wobei die Zeitintervalle ansprechend auf die Bestimmung, dass die Größe der Teile für eine Größenverringerung untauglich ist, verlängert werden.

5. Verfahren nach einem der Ansprüche 1 bis 4, das ferner umfasst:
Modifizieren der Größe der Vielzahl von Teilen und/oder der Dauer der Zeitintervalle ansprechend auf die Erfassung einer Änderung in dem Betrieb der mobilen Vorrichtung, wobei die Änderung wenigstens eines der Folgenden umfasst: Absturz der ersten Anwendung, Verringerung des freien Speichers der mobilen Vorrichtung herunter auf ein vorgegebenes Niveau und Verringerung einer Größe des freien Platzes auf einer Speichervorrichtung der mobilen Vorrichtung herunter auf ein vorgegebenes Niveau.

6. Verfahren nach einem der Ansprüche 1 bis 5, wobei das Herunterladen des Satzes von Gruppen von Filterregeln beginnend mit einer Gruppe, die Filterregeln mit den höchsten Anzeigen der Häufigkeit der Aktivierung enthält, und endend mit einer Gruppe von Regeln mit den niedrigsten Anzeigen der Häufigkeit der Aktivierung der Reihe nach erfolgt.

7. Verfahren nach einem der Ansprüche 1 bis 6, wobei die Filterregeln für das Filtern von Daten konfiguriert sind, die wenigstens eines der Folgenden enthalten: Webinhalt, Telefonanrufe und Anwendungen für mobile Vorrichtungen.

8. System zum Herunterladen von Daten, die Filterregeln enthalten, von einem entfernten Server (120) auf eine mobile Vorrichtung (100), wobei das System umfasst:
eine Speichervorrichtung (103), die eine Vielzahl von Listen mit Filterregeln speichert; und
einen Prozessor, der konfiguriert ist, um:
eine erste Liste aus einer Vielzahl von Listen mit Filterregeln, die eine höchste Anzeige für die Häufigkeit der Aktivierung der Filterregeln von der Liste haben, zu bestimmen, wobei die Filterregeln aus den Listen für die Verwendung durch eine erste Anwendung (101) auf der mobilen Vorrichtung bestimmt sind, und wobei die Filterregeln Webinhalt und/oder Aktionen und/oder Anwendungen und/oder eingehende Anrufe und/oder Nachrichten nach Telefonnummer und/oder Nachrichteninhalt filtern;
die bestimmte Liste mit Hilfe einer zweiten Anwendung (102) an die mobile Vorrichtung zu übertragen, wobei die zweite Anwendung auf der mobilen Vorrichtung ein Bereitsteller der Filterregeln für die erste Anwendung ist;
jede der verbliebenen nicht heruntergeladenen Listen mit Filterregeln, die für das Herunterladen auf die mobile Vorrichtung gedacht sind, in eine Vielzahl von Teilen mit einer ersten Größe zu teilen;
einen Satz von Gruppen von Filterregeln zu erzeugen, wobei in jeder dieser Gruppen nicht mehr als ein Teil jeder verbliebenen nicht heruntergeladenen Liste mit Filterregeln angeordnet ist; und
die Gruppen von Filterregeln während Zeitintervallen mit einer ersten Dauer an die mobile Vorrichtung zu übertragen, bis der erzeugte Satz von Gruppen vollständig auf die mobile Vorrichtung heruntergeladen ist.

9. System nach Anspruch 8, wobei der Prozessor ferner konfiguriert ist, um:
ansprechend auf das Erfassen einer Änderung im Betrieb der mobilen Vorrichtung die erste Größe der Vielzahl von Teilen mit den verbleibenden nicht heruntergeladenen Listen mit Filterregeln zu verringern.

10. System nach einem der Ansprüche 8 bis 9, wobei der Prozessor ferner konfiguriert ist, um:
ansprechend auf das Erfassen einer Änderung im Betrieb der mobilen Vorrichtung die erste Dauer der Zeitintervalle zum Herunterladen des Satzes von Gruppen von Filterregeln zu verkürzen.

11. System nach Anspruch 10, wobei die Zeitintervalle ansprechend auf die Bestimmung, dass die Größe der Teile für eine Größenverringerung untauglich ist, verlängert werden.

12. System nach einem der Ansprüche 8 bis 11, wobei der Prozessor ferner konfiguriert ist, um:
die Größe der Vielzahl von Teilen und/oder die Dauer der Zeitintervalle ansprechend auf die Erfassung einer Änderung in dem Betrieb der mobilen Vorrichtung zu modifizieren, wobei die Änderung wenigstens eines der Folgenden umfasst: Absturz der ersten Anwendung, Verringerung des freien Speichers der mobilen Vorrichtung herunter auf ein vorgegebenes Niveau und Verringerung einer Größe des freien Platzes auf einer Speichervorrichtung der mobilen Vorrichtung herunter auf ein vorgegebenes Niveau.

13. System nach einem der Ansprüche 8 bis 12, wobei das Herunterladen des Satzes von Gruppen von Filterregeln beginnend mit einer Gruppe, die Filterregeln mit den höchsten Anzeigen der Häufigkeit der Aktivierung enthält, und endend mit einer Gruppe von Regeln mit den niedrigsten Anzeigen der Häufigkeit der Aktivierung der Reihe nach erfolgt.

14. System nach einem der Ansprüche 8 bis 13, wobei die Filterregeln für das Filtern von Daten konfiguriert sind, die wenigstens eines der Folgenden enthalten: Webinhalt, Telefonanrufe und Anwendungen für mobile Vorrichtungen.

## Revendications

1. Procédé de téléchargement de données incluant des règles de filtrage à partir d'un serveur distant (120) sur un dispositif mobile (100), dans lequel le procédé comprend :
la détermination (201) d'une première liste (110), à partir d'une pluralité de listes de règles de filtrage, ayant un indicateur le plus élevé de fréquence d'actionnement des règles de filtrage de la liste, dans lequel les règles de filtrage des listes sont conçues pour une utilisation par une première application (101) sur le dispositif mobile, et dans lequel les règles de filtrage filtrent un ou plusieurs parmi un contenu Web, des actions, des applications, des appels entrants et des messages par un ou plusieurs parmi un numéro de téléphone et un contenu de message ;
la transmission (202) de la liste déterminée au dispositif mobile à l'aide d'une seconde application (102), la seconde application sur le dispositif mobile étant un fournisseur des règles de filtrage pour la première application ;
la division (203) de chacune des listes de règles de filtrage non téléchargées restantes destinées à être téléchargées sur le dispositif mobile en une pluralité de parties ayant une première taille ;
la génération (204) d'un ensemble de groupes de règles de filtrage, dans chacun desquels groupes est placée pas plus d'une partie de chaque liste de règles de filtrage non téléchargée restante ; et
la transmission des groupes de règles de filtrage au dispositif mobile au cours d'intervalles de temps ayant une première durée jusqu'à ce que l'ensemble de groupes généré soit entièrement téléchargé sur le dispositif mobile.

2. Procédé selon la revendication 1, comprenant en outre :
en réponse à la détection d'un changement dans le fonctionnement du dispositif mobile, la réduction (206) de la première taille de la pluralité de parties ayant les listes de règles de filtrage non téléchargées restantes.

3. Procédé selon l'une quelconque des revendications 1 à 2, comprenant en outre :
en réponse à la détection d'un changement dans le fonctionnement du dispositif mobile, l'augmentation de la première durée des intervalles de temps pour télécharger l'ensemble de groupes de règles de filtrage.

4. Procédé selon la revendication 3, dans lequel les intervalles de temps sont augmentés en réponse à la détermination que les tailles des parties sont inéligibles à une diminution de taille.

5. Procédé selon l'une quelconque des revendications 1 à 4, comprenant en outre :
la modification d'au moins l'une de la taille de la pluralité de parties et de la durée des intervalles de temps en réponse à la détection d'un changement dans le fonctionnement du dispositif mobile, dans lequel le changement comprend au moins l'un parmi : un plantage de la première application, une diminution de la mémoire libre du dispositif mobile jusqu'à un niveau prédéterminé et une diminution d'un volume d'espace libre sur un dispositif de stockage du dispositif mobile jusqu'à un niveau prédéterminé.

6. Procédé selon l'une quelconque des revendications 1 à 5, dans lequel le téléchargement de l'ensemble de groupes de règles de filtrage est effectué en séquence, en commençant avec un groupe incluant des règles de filtrage ayant les indicateurs les plus élevés de fréquence d'actionnement, et en terminant avec un groupe de règles ayant les indicateurs les plus bas de fréquence d'actionnement.

7. Procédé selon l'une quelconque des revendications 1 à 6, dans lequel les règles de filtrage sont configurées pour le filtrage de données incluant au moins l'un parmi un contenu Web, des appels téléphoniques et des applications pour dispositifs mobiles.

8. Système de téléchargement de données incluant des règles de filtrage à partir d'un serveur distant (120) sur un dispositif mobile (100), dans lequel le système comprend :
un dispositif mémoire (103) stockant une pluralité de listes de règles de filtrage ; et
un processeur configuré pour :
déterminer une première liste, à partir de la pluralité de listes de règles de filtrage, ayant un indicateur le plus élevé de fréquence d'actionnement des règles de filtrage de la liste, dans lequel les règles de filtrage des listes étant conçues pour une utilisation par une première application (101) sur le dispositif mobile, et dans lequel les règles de filtrage filtrent un ou plusieurs parmi un contenu Web, des actions, des applications, des appels entrants et des messages par un ou plusieurs parmi un numéro de téléphone et un contenu de message ;
transmettre la liste déterminée au dispositif mobile à l'aide d'une seconde application (102), la seconde application sur le dispositif mobile étant un fournisseur des règles de filtrage pour la première application ;
diviser chacune des listes de règles de filtrage non téléchargées restantes destinées à être téléchargées sur le dispositif mobile en une pluralité de parties ayant une première taille ;
générer un ensemble de groupes de règles de filtrage, dans chacun desquels groupes est placée pas plus d'une partie de chaque liste de règles de filtrage non téléchargée restante ; et
transmettre les groupes de règles de filtrage au dispositif mobile au cours d'intervalles de temps ayant une première durée jusqu'à ce que l'ensemble de groupes généré soit entièrement téléchargé sur le dispositif mobile.

9. Système selon la revendication 8, dans lequel le processeur est en outre configuré pour :
en réponse à la détection d'un changement dans le fonctionnement du dispositif mobile, réduire la première taille de la pluralité de parties ayant les listes de règles de filtrage non téléchargées restantes.

10. Système selon l'une quelconque des revendications 8 à 9, dans lequel le processeur est en outre configuré pour :
en réponse à la détection d'un changement dans le fonctionnement du dispositif mobile, augmenter la première durée des intervalles de temps pour télécharger l'ensemble de groupes de règles de filtrage.

11. Système selon la revendication 10, dans lequel les intervalles de temps sont augmentés en réponse à la détermination que les tailles des parties sont inéligibles à une diminution de taille.

12. Système selon l'une quelconque des revendications 8 à 11, dans lequel le processeur est en outre configuré pour :
modifier au moins l'une de la taille de la pluralité de parties et de la durée des intervalles de temps en réponse à la détection d'un changement dans le fonctionnement du dispositif mobile, dans lequel le changement comprend au moins l'un parmi : un plantage de la première application, une diminution de la mémoire libre du dispositif mobile jusqu'à un niveau prédéterminé et une diminution d'un volume d'espace libre sur un dispositif de stockage du dispositif mobile jusqu'à un niveau prédéterminé.

13. Système selon l'une quelconque des revendications 8 à 12, dans lequel le téléchargement de l'ensemble de groupes de règles de filtrage est effectué en séquence, en commençant avec un groupe incluant des règles de filtrage ayant les indicateurs les plus élevés de fréquence d'actionnement, et en terminant avec un groupe de règles ayant les indicateurs les plus bas de fréquence d'actionnement.

14. Système selon l'une quelconque des revendications 8 à 13, dans lequel les règles de filtrage sont configurées pour le filtrage de données incluant au moins l'un parmi un contenu Web, des appels téléphoniques et des applications pour dispositifs mobiles.
